# EUROPÄISCHE PATENTSCHRIFT

(11) **EP 0 296 153 B1**
(45) Veröffentlichungstag und Bekanntmachung des Hinweises auf die Patenterteilung: **31.03.1993**
(21) Anmeldenummer: 87900649.2
(22) Anmeldetag: 10.01.1987
(51) Int. Cl.: H04M 11/08, H04M 11/04

(54) **BILDSCHIRMTEXT (BTX)-TEILNEHMERSTATION**
USER DATA DISPLAY STATION
POSTE D'ABONNE AU TELETEXTE

(43) Veröffentlichungstag der Anmeldung: 28.12.1988
(73) Patentinhaber: KRAUSE, Andreas, D-30629 Hannover (DE)
(72) Erfinder: KRAUSE, Joachim, D-3000 Hannover 61 (DE)
(74) Vertreter: Thömen, Uwe, Dipl.-Ing.
(86) Internationale Anmeldenummer: DE8700014
(87) Internationale Veröffentlichungsnummer: WO8805241

(56) Entgegenhaltungen:
- EP-A- 0 096 886
- DE-A- 2 950 952
- DE-A- 3 138 648
- DE-A- 3 244 212
- DE-A- 3 521 495
- GB-A- 2 035 017

## Beschreibung

Die Erfindung betrifft eine Bildschirmtext (Btx) - Teilnehmerstation gemäß dem Oberbegriff des Anspruchs 1.

Durch das neue Medium "Bildschirmtext" - abgekürzt auch als Btx bezeichnet - ist es bekanntlich möglich, über die normale Telefonleitung Informationen zu übertragen oder abzurufen und diese auf einem Monitor oder Fernsehgerät darzustellen bzw. auf einem Rechner zu speichern oder zu verarbeiten. Dabei ist das Fernsehgerät über einen speziellen Decoder mit dem Telefon verbunden, und ferner gehört zu einer Btx-Teilnehmerstation noch eine Btx-Tastatur.

Wesentlicher Bestandteil beim Btx-System sind externe zentrale Großrechner, die ihren Speicherinhalt in abrufbaren "Seiten" bereithalten, welche auf dem Bildschirm des Fernsehgerätes darstellbar sind. Die Anwahl und der Abruf gewünschter Seiten erfolgt mit Hilfe der schon erwähnten Btx-Tastatur.

Den Btx-Anbietern wird durch das Medium Bildschirmtext also die Möglichkeit geboten, Dienstleistungen, Informationen und Angebote auf den genannten Seiten im Großrechner abzulegen und zu speichern. Der private Btx-Teilnehmer kann diese Seiten nach Wunsch auf seinem Fernsehgerät aufrufen und beispielsweise im Dialogverkehr Bestellungen aufgeben, Geldbeträge überweisen usw..

Die voranstehenden Erläuterungen lassen die vielfältigen Möglichkeiten und Vorteile erkennen, die der Bildschirmtext bietet. Gleichwohl ist festzustellen, daß Btx heute noch nicht ausreichend genutzt wird und daß vor allem die privaten Haushalte kaum von diesem neuen Medium Gebrauch machen, obwohl das als Grundvoraussetzung benötigte Telefon durchweg immer vorhanden ist.

An dieser Stelle ist zu erwähnen, daß dem Bildschirmtext doch einige Nachteile anhaften, die seiner Verbreitung entgegenstehen. Das Herstellen einer Btx-Verbindung und die Anwahl sowie der Abruf gewünschter Informationen erfordern nämlich eine erhebliche Anzahl einzelner manueller Betätigungen durch den Teilnehmer, der die Btx-Tastatur in vorgeschriebener Weise bedienen muß. Bis eine im Großrechner gespeicherte Seite auf dem Bildschirm des Fernsehgerätes dargestellt werden kann, müssen unterschiedliche Eingabeinformationen über die Btx-Tastatur in mehreren einzelnen Blöcken eingegeben werden (Zugangs-Code; Teilnehmernummer; Erkennungs-Code, usw.).

Die einzelnen Eingabeinformationsblöcke sowie die zeitliche Aufeinanderfolge müssen entsprechend der dem Bildschirmtext zugrundeliegenden Norm gewählt bzw. eingegeben werden, um die gewünschte Btx-Verbindung herzustellen.

Ferner ist es als nachteilig einzustufen, daß die Anwendungsmöglichkeiten beim Bildschirmtext trotz der zweifellos gegebenen vielfältigen Dienste heute schon an ihre Grenzen gestoßen sind und sich im wesentlichen auf kommerzielle Gesichtspunkte wie auf das Anbieten von Dienstleistungen beschränken.

Durch das Dokument DE-A-2 950 952 ist eine Schaltungsanordnung zum selbsttägigen Übertragen von Daten von einer Teilnehmerstelle zu einer Zentralstelle mit den wesentlichen Merkmalen des Oberbegriffs des Patentanspruchs 1 bekannt.

Diese Schaltungsanordnung ist über einen Decoder mit dem Telefonnetz verbindbar und umfaßt eine mit dem Decoder verbundene Eingabevorrichtung für den wählbaren Zugriff zum BTX-Netz durch Eingabe eines BTX-Anwahlsignals und mehrerer im zeitlichen Abstand aufeinander folgender Eingabeinformationen, welche teilnehmerspezifische Daten und die Anwahldaten eines anzuwählenden Teilnehmers umfassen. Dabei sind die einzelnen Eingabeinformationen in ihnen zugeordneten Speichern gespeichert, und schließlich ist noch eine selbsttätige Anwählvorrichtung für den Zugang zum BTX-Netz vorgesehen.

Bei den bei der bekannten Schaltungsanordung verwendeten Speichern handelt es sich um Festwertspeicher, in denen ein auf die Art des Notfalles hinweisender Text gespeichert ist. Dieser Text kann erst dann ausgelesen werden, wenn zuvor ein Antwortsignal von der Zentralstelle empfangen ist, so daß bei dieser Schaltungsanordnung eine Datenübertragung in beiden Richtungen vorgesehen ist, nämlich einmal von der Zentralstelle und zum anderem zu der Zentralstelle. Durch die Übertragung von Daten in beiden Richtungen wird die Gefahr von Manipulationen zu Lasten des angestrebten Datenschutzes erhöht.

Die bekannte Schaltungsanordnung sieht zur Auslösung einen manuell betätigbaren Notschalter vor. Dies bedeutet, daß in einem Notfall auch eine Person anwesend sein muß, um den Notfallschalter manuell zu betätigen. Erst danach läßt sich anschließend eine Information zur Zentralstelle übertragen, wobei diese Information allerdings nur allgemein aussagt, daß ein Notfall vorliegt. Um welchen Notfall es sich dabei konkret handelt, bleibt bei der Zentralstelle also offen.

Insgesamt ist daher die Handhabung der bekannten Schaltungsanordnung nicht als optimal zu betrachten, und auch die Erweiterung des Anwendungsbereiches für Bildschirmtext wird bei der bekannten Schaltungsanordnung nur unzureichend vorgenommen.

Der Erfindung liegt die Aufgabe zugrunde, die Handhabung beim Bildschirmtext bedienungsfreundlicher zu gestalten und zu vereinfachen und dabei gleichzeitig den Anwendungsbereich für das neue Medium Bildschirmtext für bisher nicht genutzte Zwecke zu erweitern.

Die Lösung dieser Aufgabe erfolgt bei der im Oberbegriff des Anspruchs 1 genannten BTX-Teilnehmerstation durch die Merkmale des kennzeichnenden Teils des Patentanspruchs 1.

Bei der Erfindung ist es für das Auslesen eines Speicherinhaltes im Gegensatz zum Stand der Technik nicht erforderlich, daß ein Antwortsignal von einer Zentralstelle vorliegt. Eine Übertragung von Daten in beiden Richtungen findet also nicht statt, wodurch der Gefahr von Manipulationen begegnet wird und der Datenschutz erhöht wird.

Hervorzuheben ist auch die Verwendung von frei programmierbaren Speichern, wodurch die Teilnehmerstation sehr flexibel und variabel ausgestaltet werden kann. Bei der Überwachung eines großen Industriekomplexes mit mehreren Gebäuden besteht für den Benutzer somit die Möglichkeit, alle besonderen Gefahrenstellen zu programmieren. Auch ist es möglich, die Speicher ohne weiteres umzuprogrammieren, und zwar durch den Benutzer selbst. Dieser Fall kann eintreten, wenn sich durch Baumaßnahmen die Geländestruktur eines zu überwachenden Komplexes oder auch einzelne Gebäude selbst verändern.

Ein manueller Notschalter, der von einer anwesenden Person betätigt werden muß, ist bei der Erfindung nicht erforderlich. Vielmehr wird die Anwählvorrichtung durch ein vom Benutzer wählbares Fremdsignal eingeschaltet. Ein solches Fremdsignal wird beispielsweise erzeugt, wenn eine Fensterscheibe von einer unbefugten Person zerschlagen wird, oder wenn mit einem Feuermelder ein Brand festgestellt wird. In solchen und ähnlichen Fällen bewirkt dann die Anwählvorrichtung im eingeschalteten Zustand die Erzeugung des BTX-Anwahlsignals und das Auslesen der Speicherinhalte der den Eingabeinformationen zugeordneten Speicher zum Decoder, und zwar in vorbestimmter Reihenfolge sowie in einstellbaren Zeitabständen.

Ein weiterer wesentlicher Gesichtspunkt der Erfindung besteht darin, die bekannten Eingabeinformationen, die aus einzelnen Schritten bzw. Informationsblöcken bestehen, in zugeordnete frei programmierbare Speicher abzulegen. Dadurch vereinfacht sich der Aufbau einer Btx-Verbindung zu einem zeitlich nacheinander erfolgenden Auslesen der einzelnen Speicher und der Übertragung der gespeicherten Daten zum Decoder.

Für das Auslesen eines Speichers ist es lediglich erforderlich, einen einzigen z.B. mechanisch ausgebildeten Schalter bzw. eine einzige Taste zu betätigen. Wenn beispielsweise acht Speicher vorgesehen sind, brauchen also nacheinander lediglich acht einzelne den Speichern zugeordnete Tasten für die jeweiligen Schalter von der Bedienungsperson betätigt zu werden.

Ausgehend von den obigen Überlegungen liegt der Erfindung der Gedanke zugrunde, eine selbsttätige Anwählvorrichtung bereitzustellen, welche die erwähnten mechanischen Schalter automatisch in vorbestimmter Reihenfolge und in vorbestimmten zeitlichen Abständen nacheinander betätigt. Die Anwählvorrichtung ersetzt also die bisher manuell erfolgende Betätigung der jeweiligen Funktionstasten auf der Btx-Tastatur.

Ein weiterer wesentlicher Kernpunkt der Erfindung besteht darin, daß die selbstätige Anwählvorrichtung durch ein Fremdsignal aktivierbar ist, mit der Folge, daß die ausgelöste Anwählvorrichtung automatisch die schon erwähnten Schalter betätigt und somit automatisch eine Btx-Verbindung herstellt, und zwar nach Maßgabe der in den Speichern enthaltenen Informationen.

Bei der Erfindung ist es also möglich, lediglich durch ein Signal - das Fremdsignal - automatisch eine Btx-Verbindung zu erzeugen, wodurch eine erhebliche Vereinfachung für den Benutzer geschaffen wird, der beispielsweise lediglich nur noch eine besondere Taste zu betätigen braucht, um das Fremdsignal zu erzeugen und die selbstätige Anwählvorrichtung einzuschalten.

Der weitaus größere Vorteil, der durch die Erfindung geschaffen wird, besteht aber darin, daß eine Btx-Verbindung auch ohne manuelle Betätigung einer Bedienperson völlig selbständig aufgebaut werden kann. Das Merkmal, daß lediglich ein einziges Signal erforderlich ist, um die Anwähleinheit auszulösen, ermöglicht es nämlich, die Anwähleinheit an eine bei dem Benutzer installierte Haus-Alarmanlage anzuschließen. Hier wird das Fremdsignal dann durch das Alarmsignal gebildet, welches im Falle eines Einbruches auftritt.

In dem geschilderten Fall wird dann innerhalb kürzester Zeit - etwa 40 - 60 Sekunden - eine Btx-Verbindung etwa mit einer zentralen Wach- und Schließgesellschaft oder mit der Polizei hergestellt. Dies ist ein völlig neues Anwendungsgebiet für das Medium Bildschirmtext und vor allem für private Haushalte von Bedeutung, welche bereits im Besitz von Alarmanlagen sind, oder welche sich nachträglich eine Alarmanlage installieren lassen.

Wenn man berücksichtigt, daß die Zahl der Einbrüche in letzter Zeit sprunghaft gestiegen ist, während die Aufklärungsquote dagegen extrem rückläufig ist, kann man ermessen, welchen bedeutsamen Fortschritt die Erfindung ermöglicht.

Bei den herkömmlichen Alarmanlagen ist es nämlich ein Leichtes, den ausgelösten Alarm, der meistens nur aus einem akustischen Signal besteht, nach Eindringen in die Wohnung mit einfachen Mitteln zu unterbrechen, wodurch die Wirksamkeit einer Alarmanlage erheblich eingeschränkt ist. Bei Anwendung der Erfindung hingegen merkt ein Einbrecher überhaupt nicht, daß über Bildschirmtext ein Alarmruf "gesendet" wird.

Der beschriebene Fall einer das Fremdsignal für die Auslösung der selbstätigen Anwählvorrichtung erzeugenden Alarmanlage, die übrigens auch in einer Bank installiert sein könnte, ist nur eines von vielen möglichen Anwendungsbeispielen für die Erfindung. So kann das Fremdsignal auch durch einen Rauch- oder Feuermelder erzeugt werden.

Insgesamt sind bei der Erfindung Informationsmeldungen jeglicher Art, an jedem Ort und somit an jeden Btx-Teilnehmer möglich.

Eine weitere vorteilhafte Anwendung besteht in der schnellen und unkomplizierten Hilfeauslösung für ältere, kranke oder alleinlebende Personen, die im Bedarfsfall für einen Hilferuf lediglich eine besondere Taste für das Fremdsignal betätigen zu brauchen, um etwa ein Krankenhaus "anzurufen".

In weiterer Ausgestaltung der Erfindung ist es auch denkbar, nach Herstellung der Btx-Verbindung Daten über die Btx-Leitung zu übertragen. Hier ist vor allem an Personen gedacht, welche einen Herzschrittmacher besitzen. Die Übertragung spezieller Meßdaten für die regelmäßige Überwachung des Herzschrittmachers kann nun von der Wohnung aus über Bildschirmtext zu einem Krankenhaus erfolgen.

Weitere vorteilhafte Ausgestaltungen und zweckmäßige Weiterbildungen der Erfindung sind Gegenstand der Unteransprüche und der Zeichnung zu entnehmen.

Nachfolgend wird die Erfindung anhand des in der Zeichnung dargestellten Ausführungsbeispiels näher erläutert. Es zeigen:
- Fig. 1: ein Prinzip-Blockschaltbild einer Btx-Teilnehmerstation mit einer selbstätigen Anwählvorrichtung und einer daran angeschlossenen Alarmanlage,
- Fig. 2: eine Prinzip-Darstellung einer Btx-Tastatur mit Funktionstasten und ihnen zugeordneten Speichern,
- Fig. 3: eine schematische Darstellung einer als Zeitgeberschaltung ausgebildeten selbstätigen Anwählvorrichtung und
- Fig. 4: ein Prinzip-Schaltbild der Anwählvorrichtung gemäß Fig. 3.

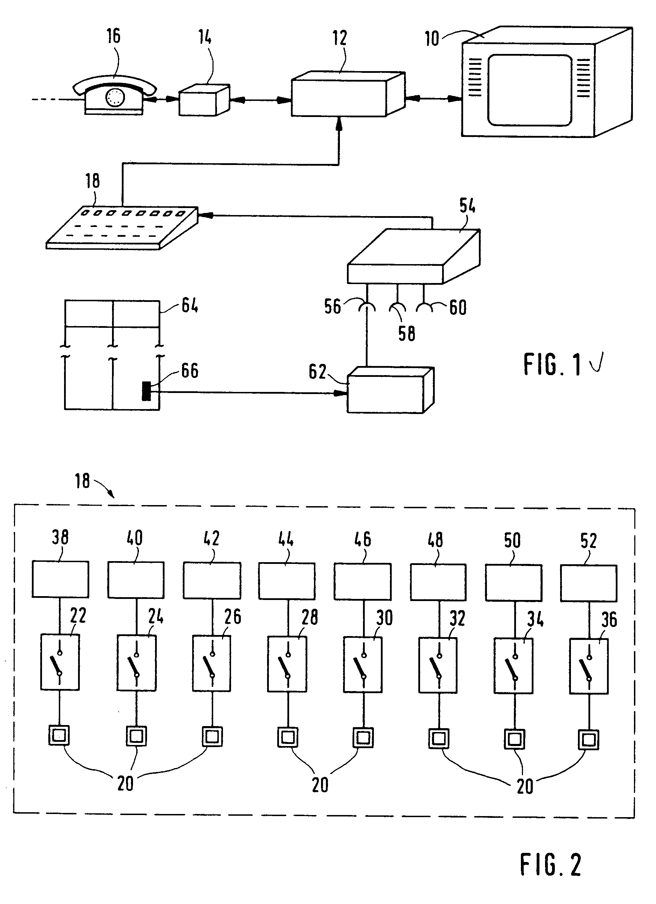

Die in Fig. 1 zeichnerisch dargestellte Btx-Teilnehmerstation beinhaltet ein Fernsehgerät 10, welches über einen üblichen Decoder 12 sowie über eine Btx-Anschlußbox 14 mit einem Telefon 16 bzw. mit dem Telefonnetz verbunden ist.

Ferner umfaßt die Btx-Teilnehmerstation noch eine Btx-Tastatur 18, die mit dem Decoder 12 verbunden ist, und die eine Vielzahl von Bedien-Tasten besitzt. Diese werden normalerweise für die Herstellung einer Btx-Verbindung sowie für den Dialog mit Btx-Anbietern benötigt. Die soweit beschriebene Btx-Teilnehmerstation ist an sich bekannt.

Fig. 2 zeigt den näheren Aufbau der Btx-Tastatur 18, wobei acht Funktionstasten 20 zu erkennen sind (die übrigen Tasten sind aus Gründen der besseren Übersichtlichkeit der Zeichnung nicht dargestellt).

Durch manuelle Betätigung der Funktionstasten 20 lassen sich diesen zugeordnete Schalter 22 - 36 kurzzeitig schließen. Jeder Funktionstaste 20 bzw. jedem Schalter 22 - 36 ist ein Speicher 38 - 52 zugeordnet. Durch Schließen eines zugehörigen Schalters 22 - 36 kann der entsprechende Speicher 38 - 52 ausgelesen werden, wobei die gespeicherten Daten zum Decoder 12 gelangen.

Wie weiter unten noch erläutert, sind die einzelnen Speicher 38 - 52 mit solchen Daten geladen, die es ermöglichen, eine Btx-Verbindung herzustellen, wenn in zeitlichen Abständen nacheinander die einzelnen Schalter 22 - 36 betätigt werden.

Gemäß Fig. 1 umfaßt die Btx-Teilnehmerstation neben der Btx-Tastatur 18 eine damit verbundene selbstätige Anwählvorrichtung 54.

Die Anwählvorrichtung 54 besitzt mehrere Eingänge 56, 58 und 60, von denen hier der Eingang 56 mit einer Alarmanlage 62 verbunden ist. An einem Fenster 64 befindet sich ein Kontaktfühler 66, der bei Einbruch anspricht und die Alarmanlage 62 aktiviert. Diese erzeugt dann ein Signal, welches über den Eingang 56 zur Anwählvorrichtung 54 gelangt und diese einschaltet.

Die Anwählvorrichtung 54 ist nun in der Weise aufgebaut, daß sie die in Fig. 2 gezeigten Schalter 22 - 36 einzeln nacheinander betätigt. Dabei sind die Zeitabstände zwischen den einzelnen Schaltvorgängen einstellbar. Die durch ein Fremdsignal - hier das Alarmsignal einer Alarmanlage 62 - eingeschaltete Anwählvorrichtung ersetzt also die manuelle Betätigung der Funktionstasten 20 der Btx-Tastatur 18, so daß automatisch nach Maßgabe der Speicherinhalte der Speicher 38 - 52 eine Btx-Verbindung hergestellt wird und selbständig Signale und Informationen über Btx übermittelt werden können.

Für die Herstellung einer Btx-Verbindung sind in dem beschriebenen Fall beispielsweise die nachfolgenden "Schritte" erforderlich:
1. Btx-Anwahl
   (Grundsätzlich als erste Stufe für den Aufbau einer Btx-Verbindung vorgesehen)
2. Code: MBF 4715 G
   (Hier wird der Code des Sendenden, also der Teilnehmerstation eingegeben)
3. Anwählen: 05113756826 G
   (Ähnlich wie beim Telefon wird hier die Teilnehmernummer des Empfängers eingegeben)
4. Sicherheits-Code: ABL 18
   (Der Code muß für den Teilnehmer gemäß 3. eingegeben werden, damit sichergestellt ist, daß nur der berechtigt Sendende Zugang zu dem gewünschten Teilnehmer hat und Unbefugte ausgeschlossen sind)
5. A, B, C ... Z (Art der Meldung)
   (Hier wird eingegeben, um welche Meldung, z.B. Alarmmeldung oder Feuer usw., es sich im Folgenden handelt)
6. "Einbruch 1774"
   (Hieran erkennt der Empfänger, daß bei der "Adresse" 1774 die Alarmanlage einen Einbruch signalisiert. Die Btx-Verbindung ist jetzt also vollständig aufgebaut, und es ist auch möglich, an dieser Stelle auf der Teilnehmerstation einen separaten Datenübermittler einzuschalten, um beispielsweise Meßdaten eines Herzschrittmachers oder andere beliebige Daten zu übertragen)
7. Freigabe der Kennung im externen Rechner
8. Ausschalten aus Btx-Verkehr.

Es sind also insgesamt acht Schritte vorgesehen, und normalerweise muß der Benutzer die einzelnen Schritte durch Betätigung der Tasten auf der Btx-Tastatur durchführen.

Bei der Btx-Tastatur 18 gemäß Fig. 2 sind die jeweiligen Informationen in den einzelnen acht Speichern 38 - 52 abgespeichert. Wenn daher der Schalter 22 geschlossen wird, erfolgt ohne weiteres Zutun die Btx-Anwahl gemäß 1., und wenn nach einem vorgegebenen zeitlichen Abstand der Schalter 24 geschlossen wird, wird der zweite Speicher 40 in den Decoder 12 ausgelesen, so daß gemäß 2. automatisch der Code des Sendenden übertragen wird usw..

Da bei der Erfindung die einzelnen Schalter 22 - 36 nacheinander automatisch durch die Anwählvorrichtung 54 betätigt werden, kann durch das Signal am Eingang 56 selbständig eine Btx-Verbindung hergestellt werden.

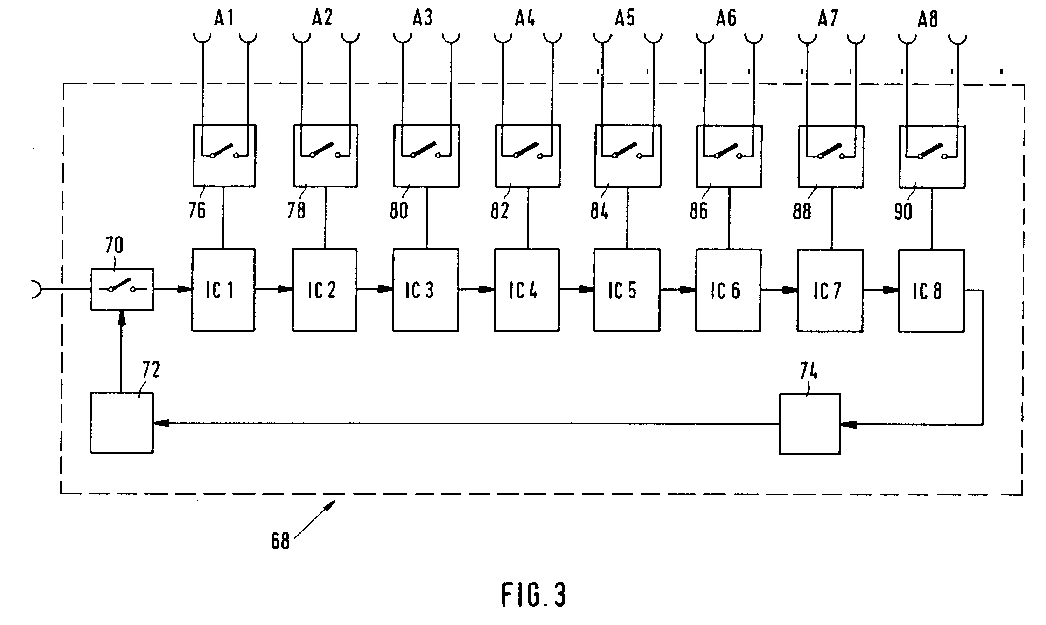

Der Prinzip-Aufbau einer als Zeitgeberschaltung 68 aufgebauten Anwählvorrichtung ist in Fig. 3 dargestellt. Wesentliche Bestandteile der Zeitgeberschaltung sind mehrere - hier acht - in Reihe geschaltete Zeitglieder IC1 - IC8.

Jedes Zeitglied IC1 - IC8 ist mit je einem Relais 76 - 90 verbunden, um einen Schaltvorgang auslösen zu können. Weiterhin besitzt die Zeitgeberschaltung 68 eine Eingangsschaltung 70, eine Verriegelungsschaltung 72 sowie eine Unterbrecherschaltung 74.

Durch die Eingangsschaltung 70 wird die Zeitgeberschaltung 68 aktiviert bzw. ausgelöst, mit der Folge, daß durch die Zeitglieder IC1 - IC8 nacheinander die Schalter der Relais 76 - 90 betätigt werden.

Zunächst wird durch das erste Zeitglied IC1 das Relais 76 betätigt, und nach Ablauf einer einstellbaren Zeitdauer wird als nächstes durch das Zeitglied IC2 das Relais 78 betätigt, usw.. Die zwischen den einzelnen Schaltvorgängen liegenden Zeitabstände lassen sich durch entsprechende Dimensionierung der Zeitglieder IC1 - IC8 nach Wunsch einstellen.

Die Relais 76 - 90 besitzen Ausgangsklemmen A1 - A8, die zur Btx-Tastatur 18 führen, und zwar zu den dortigen Schaltern 22 - 36. Dabei sind die Relais 76 - 90 den Schaltern 22 - 36 parallel geschaltet, so daß beispielsweise der Speicher 38 sowohl durch Betätigung des mechanischen Schalters 22 als auch wahlweise durch Betätigung des Relais 76 ausgelesen werden kann.

Die Eingangsschaltung 70 wird in dem gezeigten Ausführungsbeispiel durch die Alarmanlage 62 ausgelöst und aktiviert, d.h. nach Auftreten eines Alarmsignals werden die einzelnen Zeitglieder IC1 - IC8 nacheinander abgearbeitet. Die Verriegelungsschaltung 72 bewirkt eine Verriegelung der Zeitgeberschaltung 68 gegen ein erneutes Auslösen der automatischen Folgeschaltung der Zeitglieder IC1 - IC8, während die Schaltfolge gerade abgearbeitet wird. Außerdem schaltet die Verriegelungsschaltung 72 die Zeitgegebrschaltung 68 auf Bereitschaft oder setzt die Schaltfolge erneut in Tätigkeit.

Die Funktion der Unterbrecherschaltung 74 besteht darin, bei dauernd vorhandenem Fremdsignal - z.B. durch eine Alarmanlage, die sich nach Alarmauslösung nicht selbstätig in erneute Bereitschaft stellt - den automatischen Schaltfortgang und somit die automatische Meldung per Btx nach beispielsweise der dritten Meldung zu unterbrechen, bis die Anlage von Hand durch den Benutzer ausgeschaltet wird oder der Betreiber der Alarmanlage diese selbst ausschaltet und erneut in Bereitschaft setzt. Die Unterbrecherschaltung 74 stellt also sicher, daß der Btx-Empfänger nicht durch ein dauerndes Melden einer ausgelösten Alarmanlage blockiert ist.

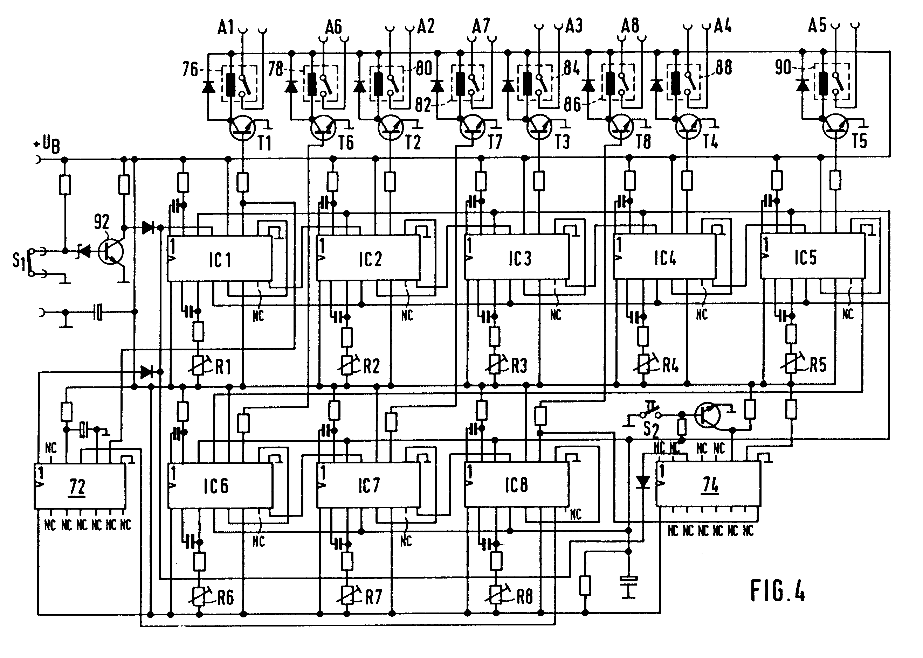

In dem Schaltbild einer Anwählvorrichtung gemäß Fig. 4 ist die beschriebene Unterbrecherschaltung 74 durch ein 4-Bit-Schieberegister gebildet. Ein Schalter S2 dient der Rücksetzung des Schieberegisters nach einer Alarmmeldung.

Die Verriegelungsschaltung 72 umfaßt in dem Schaltbild gemäß Fig. 4 ein D-Flip-Flop für die Verriegelung gegen ein erneutes Auslösen der automatischen Folgeschaltung der Zeitglieder IC1 - IC8. Unter Kontrolle des jeweiligen Eingangszustandes (Schalttransistor 92) schaltet das Flip-Flop auf Bereitschaft oder setzt die Schaltfolge der Zeitglieder IC1 - IC8 erneut in Tätigkeit. Durch den Schalter S1 ist symbolisch der Kontaktfühler 66 (vgl. Fig. 1) angedeutet. Bei geschlossenem Schalter S1 liegt kein Alarm vor, während bei geöffnetem Schalter S1 die Anwählvorrichtung 54 ausgelöst wird.

Zur Spannungsversorgung der in Fig. 4 dargestellten Anwählvorrichtung 54 dient eine Betriebsspannung +U_{B}. Die einzelnen Zeitglieder IC1 - IC8 sind jeweils durch zwei monostabile Kippstufen gebildet. Die erste Kippstufe dient für die Schaltauslösung eines jeweils mit dem Zeitglied verbundenen Transistors T1 - T8 bzw. des nachgeschalteten Relais 76 - 90.

Die zweite monostabile Kippstufe eines jeden Zeitgliedes IC1 - IC8 besitzt die Funktion eines einstellbaren Wartezeitgliedes vor der Schaltauslösung des nächsten Zeitgliedes bzw. der folgenden ersten monostabilen Kippstufe des nächsten Zeitgliedes.

Mit Hilfe von Trimmern R1 - R8 kann die Zeitdauer, die zwischen der Auslösung aufeinanderfolgender Relais liegt, nach Wunsch eingestellt werden.

## Patentansprüche

1. Bildschirmtext (Btx)-Teilnehmerstation mit einem Bildwiedergabegerät, welches über einen Decoder mit dem Telefonnetz verbindbar ist, sowie mit einer mit dem Decoder verbundenen Eingabevorrichtung für den wählbaren Zugriff zum Btx-Netz durch Eingabe eines Btx-Anwahlsignals und mehrerer im zeitlichen Abstand aufeinander folgender Eingabeinformationen, welche teilnehmerspezifische Daten und die Anwahldaten eines anzuwählenden Teilnehmers umfassen, wobei die einzelnen Eingabeinformationen in ihnen zugeordneten Speichern (38 - 52) gespeichert sind, und wobei eine selbsttätige Anwählvorrichtung (54) für den Zugang zum Btx-Netz vorgesehen ist, **dadurch gekennzeichnet,** daß die Anwählvorrichtung (54) durch ein wählbares Fremdsignal einschaltbar ist, daß die Anwählvorrichtung (54) im eingeschalteten Zustand die Erzeugung des Btx-Anwahlsignals und in vorbestimmter Reihenfolge sowie in einstellbaren Zeitabständen nacheinander das Auslesen der Speicherinhalte der den Eingabeinformationen zugeordneten Speicher (38 - 52) zum Decoder (12) bewirkt, wodurch nach Auftreten des Fremdsignals automatisch eine Btx-Verbindung hergestellt wird, und daß die Speicher als frei programmierbare Speicher (38 - 52) ausgebildet sind.

2. BTX-Teilnehmerstation nach Anspruch 1, **dadurch gekennzeichnet**, daß die Eingabevorrichtung (18) durch eine BTX-Tastatur gebildet ist, in welche die Speicher (38 - 52) integriert sind.

3. BTX-Teilnehmerstation nach einem der vorhergehenden Ansprüche 1 und/oder 2, **dadurch gekennzeichnet**, daß jedem Speicher (38 - 52) eine Funktionstaste (20) mit einem Schalter (22 - 36) zugeordnet ist, der durch Betätigung der Funktionstaste (20) schließbar ist, wodurch der Speicherinhalt des jeweiligen Speichers (38 - 52) zum Decoder (12) übertragen wird.

4. Btx-Teilnehmerstation nach Anspruch 3, **dadurch gekennzeichnet**, daß die Schalter (22 - 36) durch mechanische Schalter gebildet sind, so daß die Anwählvorrichtung (54) von der Btx-Tastatur (18) bzw. dem Decoder (12) galvanisch trennbar ist.

5. Btx-Teinehmerstation nach Anspruch 3 und/oder 4**, dadurch gekennzeichnet**, daß die Schalter (22 - 36) durch die Anwählvorrichtung (54) betätigbar sind.

6. Btx-Teilnehmerstation nach einem der vorhergehenden Ansprüche 1 - 5, **dadurch gekennzeichnet**, daß jedem Speicher (38 - 52) ein Relais (76 - 90) als Schalter zugeordnet ist, wobei jeweils ein Relais (76 - 90) einem der mechanischen Schalter (22 - 36) parallel geschaltet ist.

7. Btx-Teilnehmerstation nach Anspruch 6, **dadurch gekennzeichnet**, daß die Relais (76 - 90) einzeln nacheinander durch die Anwählvorrichtung (54) betätigbar sind.

8. Btx-Teilnehmerstation nach einem der vorhergehenden Ansprüche 1 - 7, **dadurch gekennzeichnet**, daß die Anwählvorrichtung (54) durch eine mittels eines Fremdsingnals auslösbare Zeitgeberschaltung (68) gebildet ist.

9. Btx-Teilnehmerstation nach Anspruch 8, **dadurch gekennzeichnet**, daß die Zeitgeberschaltung (68) einzelne in Reihe geschaltete Zeitglieder (IC1 - IC8) umfaßt, und daß jedes Zeitglied (IC1 - IC8) mit einem der zugeordneten Relais (76 - 90) verbunden ist.

10. Btx-Teilnehmerstation nach Anspruch 9, **dadurch gekennzeichnet**, daß jedes Zeitglied (IC1 - IC8) durch zwei monostabile Kippstufen gebildet ist, von denen die erste Kippstufe zur Schaltauslösung mit dem zugeordneten nachgeschalteten Relais (76 - 90) und die zweite Kippstufe als einstellbares Wartezeitglied mit der ersten Kippstufe des nachfolgenden Zeitgliedes (IC1 - IC8) verbunden ist.

11. Btx-Teilnehmerstation nach einem der vorhergehenden Ansprüche 1 - 10, **dadurch gekennzeichnet**, daß die Anwählvorrichtung (54) eine Eingangsschaltung (70) für ein Fremdsignal besitzt, und daß die Eingangsschaltung (70) mit dem ersten Zeitglied (IC1) verbunden ist.

12. Btx-Teilnehmerstation nach Anspruch 11, **dadurch gekennzeichnet**, daß eine mit der Eingangsschaltung (70) gekoppelte Verriegelungsschaltung (72) vorgesehen ist, um die aktivierte Anwählvorrichtung (54) während der automatischen Abarbeitung der Zeitglieder (IC1 - IC8) gegen ein erneutes Auslösen abzusichern.

13. Btx-Teilnehmerstation nach einem der vorhergehenden Ansprüche 9 - 12, **dadurch gekennzeichnet**, daß die Anwählvorrichtung (54) eine Unterbrecherschaltung (74) besitzt, um die Anwählvorrichtung (54) nach mehrmaligem automatischen Anwählen zu blockieren.

14. Btx-Teilnehmerstation nach Anspruch 13, **dadurch gekennzeichnet**, daß die Unterbrecherschaltung (74) ein Schieberegister umfaßt.

15. Btx-Teilnehmerstation nach einem der vorhergehenden Ansprüche 1 - 14, **dadurch gekennzeichnet,** daß das Fremdsignal das Auslösesignal einer Alarmanlage (62) ist.

16. Btx-Teilnehmerstation nach einem der vorhergehenden Ansprüche 1 - 14, **dadurch gekennzeichnet**, daß das Fremdsignal manuell durch Betätigung einer Taste erzeugbar ist.

17. Btx-Teilnehmerstation nach Anspruch 16, **dadurch gekennzeichnet**, daß nach Herstellung der Btx-Verbindung eine Meßvorrichtung zuschaltbar ist, deren Daten über die hergestellte Btx-Verbindung übertragbar sind.

18. Btx-Teilnehmerstation nach Anspruch 1, **dadurch gekennzeichnet**, daß die Speicher (38 - 52) als eine separate Speichereinheit von frei programmierbaren Speichern zusammengefaßt sind.

19. Btx-Teilnehmerstation nach Anspruch 1, **dadurch gekennzeichnet**, daß die Speicher (38 - 52) als frei programmierbare Speicher in die selbsttätige Anwählvorrichtung (54) integriert sind.

## Claims

1. Screen text (VDU text) subscriber station comprising an image reproduction device, which can be connected via a decoder with the telephone system, and comprising an input device connected with the decoder for the selectable access to the screen text network by input of a screen text call signal and a plurality of input informations following one another at time intervals which comprise subscriber-specific data and the call data of a subscriber to be called, the individual input informations being stored in memories (38 - 52) associated with them, and an automatic call device (54) for access to the screen text network being provided, characterized in that the call device (54) can be switched on by a selectable external signal, that the call device (54) in the switched-on state causes the generation of the screen text call signal and, successively in a predetermined sequence and at adjustable time intervals, the reading-out of the memory contents of the memories (38 - 52) associated with the input informations to the decoder (12), with the result that, after the external signal has occurred, a screen text connection is automatically made, and that the memories are constructed as freely programmable memories (38 - 52).

2. Screen text subscriber station according to Claim 1, characterized in that the input device (18) is formed by a screen text keyboard, into which the memories (38 - 52) are integrated.

3. Screen text subscriber station according to one of the preceding Claims 1 and/or 2, characterized in that a function key (20) is associated with each memory (38 - 52), each function key having a switch (22 - 36) which can be closed by actuation of the function key (20), thus causing the content of the associated memory (38 - 52) to be transmitted to the decoder (12).

4. Screen text subscriber station according to Claim 3, characterized in that the switches (22 - 36) are formed by mechanical switches, so that the call device (54) can be electrically isolated from the screen text keyboard (18) and the decoder (12).

5. Screen text subscriber station according to Claim 3 and/or 4, characterized in that the switches (22 - 36) can be actuated by the call device (54).

6. Screen text subscriber station according to one of the preceding Claims 1 to 5, characterized in that a relay (76 - 90) is associated as switch with each memory (38-52), one relay (76 - 90) each being connected in parallel with one of the mechanical switches (22 - 36).

7. Screen text subscriber station according to Claim 6, characterized in that the relays (76 - 90) can be actuated silly one after another by the call device (54).

8. Screen text subscriber station according to one of the preceding Claims 1 to 7, characterized in that the call device (54) is formed by a timer circuit (68), which can be triggered by an external signal.

9. Screen text subscriber station according to Claim 8, characterized in that the timer circuit (68) comprises timing elements (IC1 - IC8) connected individually in series, and that each timing element (IC1 - IC8) is connected with one of the associated relays (76 - 90).

10. Screen text subscriber station according to Claim 9, characterized in that each timing element (IC1 - IC8) is formed of two monostable flip-flops, of which the first flip-flop for triggering switching is connected with the associated relay (76 - 90) and the second flip-flop is connected, as adjustable delay element, with the first flip-flop of the succeeding timing element (IC1 - IC8).

11. Screen text subscriber station according to one of the preceding Claims 1 to 10, characterized in that the call device (54) possesses an input circuit (70) for an external signal, and that the input circuit (70) is connected with the first timing element (IC1).

12. Screen text subscriber station according to Claim 11, characterized in that an interlock circuit (72), coupled with the input circuit (70), is provided for protecting the activated call device (54) against renewed triggering during the automatic working-through of the timing elements (IC1 - IC8).

13. Screen text subscriber station according to one of the preceding Claims 9 to 12, characterized in that the call device (54) possesses an interrupter circuit (74) for blocking the call device (54) after automatic calling has been repeated several times.

14. Screen text subscriber station according to Claim 13, characterized in that the interrupter circuit (74) comprises a shift register.

15. Screen text subscriber station according to one of the precoding Claims 1 to 14, characterized in that the external signal is the triggering signal of an alarm installation (62).

16. Screen text subscriber station according to one of the preceding Claims 1 to 14, characterized in that the external signal can be generated manually by actuation of a key.

17. Screen text subscriber station according to Claim 16, characterized in that, after the screen text connection has been made, a measuring device can be connected in, the data of which can be transmitted via the made screen text connection.

18. Screen text subscriber station according to Claim 1, characterized in that the memories (38 - 52) are combined as a separate memory unit of freely programmable memories.

19. Screen text subscriber station according to Claim 1, characterized in that the memories (38 - 52) are integrated as freely programmable memories into the automatic call device (54).

## Revendications

1. Poste d' abonné Btx au télétexte pourvu d'un appareil de reproduction d'images qui peut être connecté par un décodeur au réseau téléphonique, ainsi que d'un dispositif d'entrée relié au décodeur pour l'accès sélectif au réseau Btx par entrée d'un signal de sélection Btx et plusieurs informations d'entrée séquentielles avec un écart de temps, qui contiennent des données spécifiques de l'abonné et les données de sélection d'un abonné appelé, les informations d'entrée individuelles étant mémorisées dans leurs mémoires attribuées (38 à 52), un dispositif de sélection automatique (54) étant prévu pour l'accès au réseau Btx, **caractérisé en ce** que le dispositif de sélection (54) peut être commuté par un signal externe que l'on peut sélecter, en ce que le dispositif de sélection (54) à l'état commuté provoque la production du signal de sélection Btx et, dans la séquence prédéterminée ainsi qu'avec des écarts de temps réglables la sortie séquentielle vers le décodeur (12) des contenus des mémoires (38 à 52) affectées aux informations d'entrée de manière qu'après l'apparition du signal externe une liaison Btx soit automatiquement établie, et en ce que les mémoires sont conçues comme des mémoires (38 à 52) librement programmables.

2. Poste d'abonné Btx suivant la revendication 1, **caractérisé en ce** que le dispositif d'entrée (18) est consitué par un clavier dans lequel sont intégrées les mémoires (38 à 52).

3. Poste d'abonné Btx suivant l'une des revendications précédentes 1 et/ou 2, **caractérisé en ce** qu'à chaque mémoire (38 à 52) est affectée une touche de fonction (20) avec un commutateur (22 à 36) qui peut être fermé en actionnant la touche de fonction (20) de sorte que le contenu de la mémoire (38 à 52) correspondante soit transmis au décodeur (12).

4. Poste d' abonné Btx suvant la revendication 3, **caractérisé en ce** que les commutateurs (22 à 36) sont constitués par des commutateurs mécaniques de sorte que le dispositif de sélection (54) peut être séparé galvaniquement du clavier Btx (18) ou du décodeur (12).

5. Poste d'abonné Btx suivant la revendication 3 et/ou 4, **caractérisé en ce** que les commutateurs (22 à 36) peuvent être commandés par le dispositif de sélection (54).

6. Poste d'abonné Btx suivant l'une des revendications précédentes 1 à 5, **caractérisé en ce** qu'à chaque mémoire (38 à 52) est affecté comme commutateur un relais 76 à 90), un relais (76 à 90) étant respectivement monté en parallèle sur un commutateur mécanique (22 à 36).

7. Poste d'abonné Btx suivant la revendication 6, **caractérisé en ce** que les relais (76 à 90) peuvent être commandés individuellement séquentiellement par le dispositif de sélection (54).

8. Poste d'abonné Btx suivant l'une des revendications précédentes 1 à 7, **caractérisé en ce** que le dispositif de sélection (54) est constitué par un circuit de base de temps (68) qui peut être déclenché par un signal externe.

9. Poste d'abonné Btx suivant la revendication 8, **caractérisé en ce** que le circuit de base de temps (68) comprend des systèmes temporisés individuels (ICI à IC8) montés en série, et en ce que chaque système temporisé (IC1 à IC8) est relié à un des relais affectés (76 à 90).

10. Poste d'abonné Btx suivant la revendication 9, **caractérisé en ce** que chaque système temporisé (IC1 à IC8) est constitué par deux bascules monostables dont la première est reliée pour le déclenchement de commutation avec le relais affecté intercalé (76 à 90) et dont la seconde, en tant qu'élément de temporisation réglable, est reliée à la première bascule du système de temporisation suivant (IC1 à IC8).

11. Poste d'abonné Btx suivant l'une des revendications précédentes 1 à 10, **caractérisé en ce** que le dispositif de sélection (54) comprend un commutateur d'entrée (70) pour un signal externe et en ce que le commutateur d'entrée (70) est relié au premier système de temporisation (IC1).

12. Poste d'abonné Btx suivant la revendication 11, **caractérisé en ce** qu'un commutateur de verrouillage (72) est prévu avec le commutateur d'entrée (70) pour protéger contre un nouveau déclenchement le dispositif de sélection (54) activé pendant la prise en charge automatique du système temporisé (IC1 à IC8).

13. Poste d'abonné Btx suivant l'une des revendications précédentes 9 à 12, **caractérisé en ce** que le dispositif de sélection (54) comprend un commutateur d'interruption (74) pour bloquer le dispositif de sélection (54) après des sélections automatiques répétées.

14. Poste d'abonné Btx suivant la revendication 13, **caractérisé en ce** que le commutateur d'interruption (74) comporte un registre à décalage.

15. Poste d'abonné Btx suivant l'une des revendications précédentes 1 à 14, **caractérisé en ce** que le signal externe est le signal de déclenchement d'un appareil d'alarme (62).

16. Poste d'abonné Btx suivant l'une des revendications précédentes 1 à 14, **caractérisé en ce** que le signal externe peut être produit manuellement en actionnant une touche.

17. Poste d'abonné Btx suivant la revendication 16, **caractérisé en ce** qu'après établisement de la liaison Btx, un dispositif de mesure peut être raccordé dont les données sont transmissibles par la liaison Btx établie.

18. Poste d'abonné Btx suivant la revendication 1, **caractérisé en ce** que les mémoires (38 à 52) sont réunies comme une unité séparée de mémoires librement programmables.

19. Poste d'abonné Btx suivant la revendication 1, **caractérisé en ce** que les mémoires (38 à 52) sont intégrées sous forme de mémoires librement programmables dans le dispositif de sélection automatique (54).
